# EUROPÄISCHE PATENTSCHRIFT

(11) **EP 0 339 014 B1**
(45) Veröffentlichungstag und Bekanntmachung des Hinweises auf die Patenterteilung: **10.03.1993**
(21) Anmeldenummer: 89890101.2
(22) Anmeldetag: 10.04.1989
(51) Int. Cl.: B60K 23/04

(54) **Differentialgetriebe**
Differential gearing
Transmission différentielle

(30) Priorität: 20.04.1988 AT 1009/88
(43) Veröffentlichungstag der Anmeldung: 25.10.1989
(73) Patentinhaber: STEYR-DAIMLER-PUCH AKTIENGESELLSCHAFT, 1010 Wien (AT)
(72) Erfinder: Fleischmann, Otwin, Ing. (grad), D-6501 Nieder-Olm (DE); Sommer, Hans Dieter, Dipl.-Ing., A-8010 Graz (AT); Erhart, Erich, A-8042 Graz-St. Peter (AT); Koch, Johann, A-8053 Graz (AT)

(56) Entgegenhaltungen:
- EP-A- 0 233 587
- WO-A-81/02049
- WO-A-81/02188
- US-A- 3 871 249
- Soviet Inventions Illustrated,Derwent Publications Ltd,Sektion Mechanik,Woche 8432, Zusammenfassung Nr.199827,Q13,19.September 198 & SU-A-1058805(KOZLOV),07.Dezember 1983

## Beschreibung

Die Erfindung bezieht sich auf ein Differentialgetriebe für frontgetriebene Kraftfahrzeuge, mit einer in Abhängigkeit von der Fahrzeuggeschwindigkeit steuerbaren Differentialsperre.

Die Traktion von Kraftfahrzeugen kann vor allem beim Auftreten unterschiedlicher Reibwerte zwischen den beiden Antriebsrädern durch Differentialsperren erheblich gesteigert werden, doch beeinflussen gesperrte Differentiale, abgesehen vom damit verbundenen erhöhten Verschleiß und Kraftstoffverbrauch, grundsätzlich auch das Fahrverhalten der Fahrzeuge, welcher Einfluß umso nachteiliger wird, je schneller sich das Fahrzeug bewegt. Besonders unangenehme Begleiterscheinungen ergeben sich auf Grund des gesperrten Differentials bei frontgetriebenen Fahrzeugen, da die Differentialsperre Lenkmomentschwankungen mit sich bringt, die zu einer Minderung der Fahrstabilität und damit der Fahrsicherheit führen.

Um die Nachteile gesperrter Differentiale in Grenzen zu halten und dennoch die Vorteile einer Differentialsperre nützen zu können, wurden bereits verschiedene steuerbare Differentialsperren vorgeschlagen.

Eine Differentialsperre gemäß dem Oberbegriff des 1.Anspruches ist aus der SU 1058-805-A bekannt. Bei dieser wird von den beiden Rädern der angetriebenen Achse je eine Ölpumpe angetrieben und durch Druckvergleich ein der Differenz der Raddrehzahlen und damit auch dem Schlupf entsprechendes Signal gebildet, das über ein Logikelement die Sperre betätigt. Nachteilig ist daran, daß die Sperre erst betätigt wird, wenn bereits ein Rad rutscht. Dadurch wirkt die Sperre beim Anfahren zu spät und gefährdet während der Fahrt die Seitenstabilität des Fahrzeuges.

Aus der EP-A-0 233 587 ist es bekannt, das Differentialgetriebe bei Erreichen bzw. Überschreiten eines vorgegebenen Grenzwertes des Relativschlupfes der Antriebsräder zu sperren. Der geltende Grenzwert dieses Relativschlupfes wird zur Vermeidung ungewollten Sperrens beim Lenkeinschlag in Abhängigkeit von der Fahrgeschwindigkeit bestimmt. Bei niedriger Fahrgeschwin-digkeiten wird ein höherer Grenzwert und bei höherer Fahrgeschwindigkeit ein niedrigerer Grenzwert vorgegeben. Mit dieser Steuerung soll bei Ackerschleppern lediglich ein Fehlverhalten der üblichen Differentialsperre bei sehr geringer Fahrgeschwindigkeit durch Lenkeinschläge verhindert werden. Hier, wie auch bei anderen von der Fahrgeschwindigkeit abhängigen Steuerungen der Differentialsperre, ist außerdem eine reine Ein/Aus-Charakteristik, sodaß die Sperre entweder ein maximales oder ein minimales Sperrmoment aufbringt und oft gefährlich abrupte Änderungen des Fahrverhaltens bedingt.

Weiters ist aus der EP-A-0 128 477 ein Regelsystem für eine Differentialsperre mit zwei Steuereinheiten bekannt, von denen die erste auf zumindest eine Fahrzeugfunktion, z.B. die Fahrzeuggeschwindigkeit, anspricht und ausschließlich eine Entsperrung des Differentiales bewirkt, und von denen die zweite auf zumindest eine weitere Fahrzeugfunktion, z.B. der Lenkung, anspricht und nur das entsperrte Differential ab einem vorgegebenen Wert automatisch sperrt. Auch dieses Regelsystem ist für Ackerschlepper bestimmt und soll vor allem Störung beim Lenken durch ein gesperrtes Differential verhindern. Es die steuert die Sperre in Abhängigkeit von mehreren Fahrzeugfunktionen und verlangt daher auch umfangreiche Regelkreise, Schalt- und Stelleinrichtungen u.dgl. Abgesehen davon kommt es auch hier nur zu einem vollen Sperren oder Entsperren des Differentiales und nicht zu einer Anpassung des Sperrmomentes an unterschiedliche Bedingungen.

Die DE-A-36 37 820 schließlich zeigt ein Differential mit steuerbarer Sperre, dessen Sperrmoment in Abhängigkeit von Fahrbedingungen und Betriebszuständen verändert wird. Steuerparameter sind dabei u.a. die Fahrgeschwindigkeit und die jeweilige Charakteristik eines variablen Fahrzeug-Federungssystems und die Sperre wird ständig durch Abstimmung des Sperrmomentes auf das Aufhängungs- oder Federungsverhalten u.dgl.im Sinne eines optimalen Fahrkomforts gesteuert. Als Sperre dient eine hydraulisch betätigbare Reibungskupplung mit einem Ventil, das den hydraulischen Betätigungsdruck der Kupplung steuert. Diese Lösung ist steuerungs- und bautechnisch sehr aufwendig und eignet sich nicht zur Verbesserung des reinen Anfahrverhaltens von Fahrzeugen.

Der Erfindung liegt daher die Aufgabe zugrunde, diese Mängel zu beseitigen und ein Differentialgetriebe der eingangs geschilderten Art zu schaffen, das auf einfache und funktionssichere Weise die Traktion von Kraftfahrzeugen während des Anfahrens im gewünschten Ausmaß steigert, ohne das Fahrverhalten des Fahrzeuges während Fahrt mit mittlerer bis höherer Geschwindigkeit zu beeinträchtigen.

Die Erfindung löst diese Aufgabe dadurch, daß die Differentialsperre vom Fahrzeugstillstand bis zu einer bestimmten Fahrzeuggrenzgeschwindigkeit auschließlich in Abhängigkeit von der Fahrzeuggeschwindigkeit im Sinne eines mit ansteigender Fahrzeuggeschwindigkeit abfallenden Sperrmomentes ansteuerbar ist.

Durch dieses simple Steuerungsverfahren für die Differentialsperre ist das maximale Sperrmoment genau dann verfügbar, wenn die höchste Traktion erwünscht ist, also im Augenblick des Anfahrens, und verringert sich dann im Maße der Geschwindigkeitszunahme . So wird der nachteilige Einfluß der Differentialsperre auf das Fahrverhalten sogar im Bereich der geringen Anfahrgeschwindigkeiten unterbunden und dennoch der volle, das Anfahrverhalten des Fahrzeuges verbessernde, Effekt der Differentialsperre gewährleistet. Das Differential wird ja vorbeugend im erforderlichen Umfang gesperrt, bevor es noch in Tätigkeit tritt, und selbst wenn es dann nicht gebraucht wird. Nach Überwinden des Anfahrzustandes bleibt die Differentialsperre ab der Grenzgeschwindigkeit außer Funktion, und es stellt sich ein durch die Ausgleichsfähigkeit des Differentiales mitbestimmtes Fahrverhalten ein.

Ab der Grenzgeschwindigkeit läßt sich die Differentialsperre zur vollen Beseitigung des Sperrmomentes überhaupt ausschalten, sie kann aber auch in einer möglichen Abwandlung ab der Grenzgeschwindigkeit im Sinne eines gleichbleibenden Restsperrmomentes ansteuerbar sein, um das Traktions- und Fahrverhalten des Fahrzeuges über den gesamten Geschwindigkeitsbereich zu beeinflussen.

In einer vorteilhaften Ausgestaltung der Erfindung ist ein einer ungetriebenen Fahrzeugachse zugeordneter Drehzahlgeber den Geschwindigkeitssensor bildet. Dabei stellt die Drehzahl der nicht angetriebenen Fahrzeugachse ein genaues Maß für die Fahrzeuggeschwindigkeit dar, auch wenn beide angetriebenen Räder rutschen.

Nach einer besonders vorteilhaften Ausgestaltung der Erfindung ist bei einem Differentialgetriebe mit einer aus einer kraftschlüssigen Kupplung bestehenden Differentialsperre und einem über eine Steuerungseinrichtung in Abhängigkeit von der durch einen Geschwindigkeitssensor erfaßbaren Fahrzeuggeschwindigkeit ansteuerbaren Stelltrieb zur Kupplungsbetätigung ein im Ausrücksinn der Kupplung unterdruckbeaufschlagbarer, eine steuerbare Druckregelvorrichtung aufweisender, Stelltrieb vorgesehen. Ein solches Luftunterdrucksystem für die Ein- und Ausrückbewegung der Differentialsperre erlaubt eine einfache, funktionssichere und kostengünstige Konstruktion. Das der Drehzahl entsprechend eingeregelte Druckniveau zur Stelltriebbeaufschlagung führt zur gewünschten Einrückstellung der Kupplung und damit zur erforderlichen Sperrmomentbegrenzung, sodaß eine robuste und aufwandsarme Differentialsperrensteuerung gewährleistet ist.

Vorteilhaft ist es dabei, wenn erfindungsgemäß der Stelltrieb aus einer Unterdruckdosenanlage besteht, die einerseits mit einer Unterdruckquelle, vorzugsweise einer Vakuumpumpe, und anderseits mit einem Schaltgestänge od.dgl. der Kupplung in Verbindung steht. Die Unterdruckanlage bietet eine wartungsfreie, funktionstüchtige Betätigungseinrichtung für die Kupplung, wobei die Verbindungsleitung zwischen Pumpe und Unterdruckdose ein "pneumatisches Übertragungsgestänge" darstellt, das die Einbaubedingungen erleichtert und die beliebig weit entfernte Anordnung der Unterdruckquelle erlaubt.

Als Druckregelvorrichtung könnte die Unterdruckquelle selbst, also beispielsweise die Vakuumpumpe oder ein vom Saugrohr des Motors gespeister Unterdruckspeicher dienen, doch ist es besonders zweckmäßig, wenn als Druckregelvorrichtung ein Belüfungsventil vorgesehen ist, das den Unterdruck im Unterdrucksystem bei konstant wirkender Unterdruckquelle durch Belüften steuerbar macht.

Ist die Druckregelvorrichtung über die Steuerungseinrichtung durch Pulse mit von der Fahrzeuggeschwindigkeit abhängiger Frequenz betätigbar, gelingt die Drucksteuerung auf besonders rationelle Weise, da durch den pulsartigen Antrieb der Pumpe oder vor allem das pulsartige Öffnen des Belüftungsventils eine wirtschaftliche und zuverlässige Beeinflussung des Unterdruckniveaus möglich ist.

Um durch die Differentialsperre ein gegebenenfalls vorhandenes ABS (Antiblockiersystem) nicht zu beeinträchtigen, kann erfindungsgemäß die Differentialsperre über die Steuerungseinrichtung bei einer Betätigung der Bremse ausschaltbar sein, sodaß sich unabhängig von der Funktionsweise des ABS diese Differentialsperre mit jedem ABS kombinieren läßt.

In der Zeichnung ist der Erfindungsgegenstand rein schematisch in einem Ausführungsbeispiel veranschaulicht, und zwar zeigen
Fig.1 ein Diagramm über den Verlauf des bei einem erfindungsgemäßen Differentialgetriebe auftretenden Sperrmomentes in Abhängigkeit von der Fahrzeuggeschwindigkeit und
Fig.2 ein erfindungsgemäßes Differentialgetriebe im Anlagenschema.

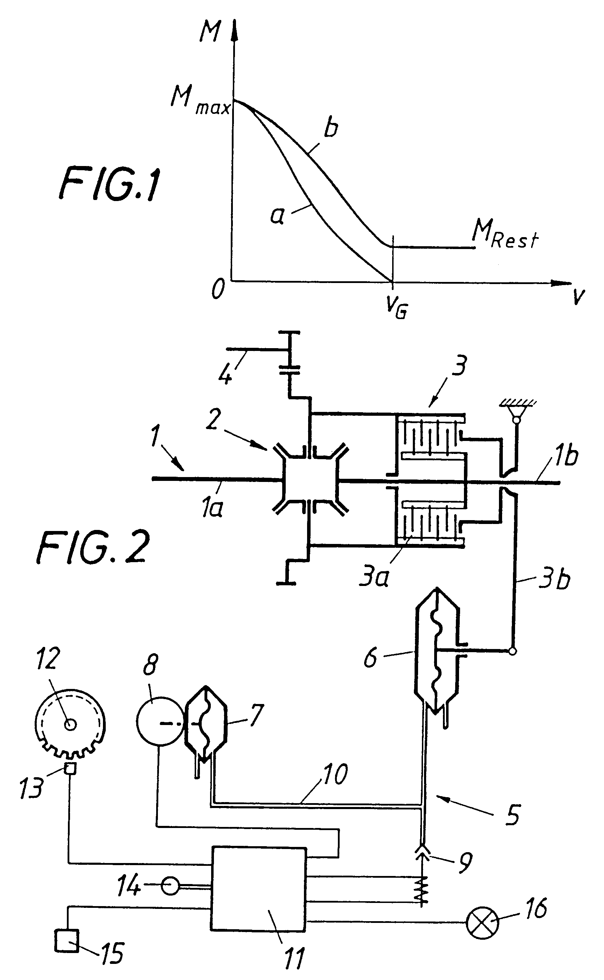

Um das Anfahrverhalten eines einachsgetriebenen, vorzugsweise frontgetriebenen Fahrzeuges zu verbessern, ohne durch ein gesperrtes Differential die Fahreigenschaften zu beeinträchtigen, gibt es ein in die Antriebsachse 1 eingebundenes Differential 2 mit einer Differentialsperre 3, die vom Fahrzeugstillstand bis zu einer bestimmten Fahrzeuggrenzgeschwindigkeit im Sinne eines bei steigender Geschwindigkeit fallenden Sperrmomentes ansteuerbar ist. Wie aus dem Diagramm gemäß Fig. 1 hervorgeht, in dem das Sperrmoment M über der Fahrzeuggeschwindigkeit v aufgetragen ist, tritt bei Fahrzeugstillstand, also bei Geschwindigkeit v = 0, das maximale Sperrmoment M max auf, das bei Zunahme der Geschwindigkeit bis zu einer Grenz-geschwindigkeit vG entlang der Kurve a abfällt und bei Erreichen der Grenzgeschwindigkeit vG durch Ausschalten der Differentialsperre verschwindet.

Auf Grund einer entsprechenden Vorgabe für die Steuerung der Differentialsperre 3 läßt sich das Sperrmoment M auch vom Ausgangswert M max bei Fahrzeugstillstand entlang der Kurve b absenken, bis bei der Grenzgeschwindigkeit vG ein Restsperrmoment M Rest erreicht ist, das dann auch bei erhöhter Fahrzeuggeschwindigkeit v konstant aufrecht erhalten wird, um durch dieses Restsperrmoment das Fahrverhalten des Fahrzeuges beeinflussen zu können. Eine dem Verlauf a oder b entsprechende Sperrmomentenänderung in Abhängigkeit von der Fahrzeuggeschwindigkeit gewährleistet, daß während des Anfahrzustandes die gewünschte Steigerung der Traktion durch das aufgebrachte Sperrmoment erreicht wird, daß aber durch die Momentenabnahme mit steigender Fahrzeuggeschwindigkeit und dem Vorhandensein eines Restsperrmomentes oder gar eines Nullsperrmomentes ab einer bestimmten Grenzgeschwindigkeit vG ein nachteiliger Einfluß der Differentialsperre auf das Fahrverhalten verhindert wird.

Im Ausführungsbeispiel nach Fig. 2 weist die Antriebsachse 1, die Vorderachse, das Differentialgetriebe 2 mit der Differentialsperre 3 auf, wobei das Differential 2 das Antriebsmoment von der Antriebswelle 4 auf die beiden Halbachsen 1a, 1b der Vorderachse überträgt und entsprechend den auftretenden Widerstandsmomenten aufteilt. Diese Ausgleichsfähigkeit des Differentialgetriebes 2 wird durch die Differentialsperre 3, die als Lamellenkupplung 3a ausgebildet ist, im Maße der Kupplungsbetätigung und des damit entstehenden Sperrmomentes behindert.

Die Lamellenkupplung 3a ist über ein Schaltgestänge 3b ein- und ausrückbar, wobei zur Betätigung dieses Schaltgestänges 3b ein unterdruckbeaufschlagbarer Stelltrieb 5 vorgesehen ist. Der Stelltrieb 5 besteht aus einer Unterhosenanlage mit einer am Schaltgestänge 3b angreifenden Unterdruckdose 6 und einer Vakuumpumpe 7, die von einem Motor 8 antreibbar ist. Wird die Vakuumpumpe 7 in Betrieb gesetzt, läßt sich das Schaltgestänge 3b in Abhängigkeit vom herrschenden Unterdruck im Einrücksinn bewegen, wobei ein Belüftungsventil 9 in der Verbindungsleitung 10 zwischen Unterdruckdose 6 und Pumpe 7 eine einfache Regelung des Unterdruckniveaus erlaubt.

Zur Steuerung der Differentialsperre 3 ist eine Steuerungs-einrichtung 11 vorgesehen, der über einen der ungetriebenen Hinterachse 12 des Fahrzeuges zugeordneten Drehzahlgeber 13 die jeweilige Drehzahl der Hinterachse 12 als Maß für die Fahrzeuggeschwindigkeit eingegeben wird. In Abhängigkeit davon steuert die Steuerungseinrichtung 11 das Belüftungsventil 9 an, das nun eine der Fahrzeuggeschwindigkeit entsprechende Unterdruckregelung des Stelltriebes 5 vornimmt. Durch ein einfaches Pulsen des Belüftungsventiles 9 kommt es bei konstant laufender Vakuumpumpe 7 zur gewünschten Steuerung der Druckbeaufschlagung des Stelltriebes 5 und damit zu einer in Abhängigkeit von der Fahrzeuggeschwindigkeit mehr oder weniger stark eingerückten Differentialsperre 3.

Ein Handschalter 14 erlaubt das Betätigen der Differentialsperre 3 von Hand, wozu noch ein durch eine Bremsbetätigung aktivierbarer Bremsschalter 15 kommt, der über die Steuerungseinrichtung 11 die Sperre 3 ausschaltet, um das Differential 2 mit einem beliebigen ABS kombinierbar zu machen. Kontrollichter 16 o.dgl. erlauben eine Funktionsüberwachung, wobei selbstverständlich die gesamte Anlage durch den Zündschlüssel ein- und ausschaltbar ist und auch die Vakuumpumpe 7 durch die Steuerungseinrichtung 11 nur bei Bedarf in Betrieb gesetzt wird.

## Patentansprüche

1. Differentialgetriebe (2) für frontgetriebene Kraftfahrzeuge, mit einer in Abhängigkeit von der Fahrzeuggeschwindigkeit (v) steuerbaren Differentialsperre (3), **dadurch gekennzeichnet**, daß die Differentialsperre (3) vom Fahrzeugstillstand bis zu einer bestimmten Fahrzeuggrenzgeschwindigkeit (vG) ausschließlich in Abhängigkeit von der Fahrzeuggeschwindigkeit im Sinne eines mit ansteigender Fahrzeuggeschwindigkeit (v) abfallenden Sperrmomentes (M) ansteuerbar ist.

2. Differentialgetriebe nach Anspruch 1, **dadurch gekennzeichnet**, daß die Differentialsperre (3) ab der Grenzgeschwindigkeit (vG) im Sinne eines gleichbleibenden Restsperrmomentes (M Rest) ansteuerbar ist.

3. Differentialgetriebe nach Anspruch 1, **dadurch gekennzeichnet**, daß ein einer ungetriebenen Fahrzeugachse (12) zugeordneter Drehzahlgeber (13) den Geschwindigkeitssensor bildet.

4. Differentialgetriebe nach Anspruch 1 oder 2, mit einer aus einer kraftschlüssigen Kupplung, vorzugsweise Lamellenkupplung (3a) bestehenden Differentialsperre (3) und einem über eine Steuerungseinrichtung (11) in Abhängigkeit von der durch einen Geschwindigkeitssensor erfaßbaren Fahrzeuggeschwindigkeit ansteuerbaren Stelltrieb zur Kupplungsbetätigung, **dadurch gekennzeichnet**, daß ein im Ausrücksinn der Kupplung (3a) unterdruckbeaufschlagbarer, eine steuerbare Druckregelvorrichtung (9) aufweisender Stelltrieb (5) vorgesehen ist.

5. Differentialgetriebe nach Anspruch 4, **dadurch gekennzeichnet**, daß der Stelltrieb (5) aus einer Unterdruckdosenanlage (6,7,10) besteht, die einerseits eine Unterdruckquelle, vorzugsweise Vakuumpumpe (7), und andererseits eine mit einem Schaltgestänge (3b) od.dgl. der Kupplung (3a) in Verbindung stehende Unterdruckdose (6) umfaßt.

6. Differentialgetriebe nach Anspruch 4 oder 5, **dadurch gekennzeichnet**, daß als Druckregelvorrichtung ein Belüftungsventil (9) vorgesehen ist.

7. Differentialgetriebe nach einem der Ansprüche 4 bis 6, **dadurch gekennzeichnet**, daß die Druckregelvorrichtung (9) über die Steuerungseinrichtung (11) durch eine in ihrer Frequenz von der Fahrzeuggeschwindigkeit abhängige Pulsung betätigbar ist.

8. Differentialgetriebe nach einem der Ansprüche 1 bis 7, **dadurch gekennzeichnet**, daß die Differentialsperre (3) über die Steuerungseinrichtung (11) bei einer Bremsbetätigung ausschaltbar ist.

## Claims

1. A differential gearing (2) for front-wheel-drive motor vehicles, having a differential lock (3) controllable as a function of the vehicle speed (v), characterized in that the differential lock (3) is actuable from the stationary state of the vehicle to a specific vehicle threshold speed (vG) exclusively as a function of the vehicle speed in the sense of a locking moment (M) which drops as the vehicle speed (v) increases.

2. A differential gearing according to Claim 1, characterized in that the differential lock (3) is actuable from the threshold speed (vG) in the sense of a constant residual locking moment (M Res).

3. A differential gearing according to Claim 1, characterized in that a speed transmitter (13) associated with an non-driven vehicle axle (12) forms the speed sensor.

4. A differential gearing according to Claim 1 or 2, having a differential lock (3) comprising a non-positively locking clutch, preferably a multiple-disc clutch (3a), and an actuating drive-actuable by way of a control device (11) as a function of the vehicle speed detectable by a speed sensor-for actuating the clutch, characterized in that an actuating drive (5) is provided which can be acted upon with reduced pressure so as to disengage the clutch (3a) and which has a controllable pressure-regulating device (9).

5. A differential gearing according to Claim 4, characterized in that the actuating drive (5) comprises a reduced-pressure container arrangement (6, 7, 10) comprising on the one hand a source of reduced pressure, preferably a vacuum pump (7), and on the other hand a reduced-pressure container (6) connected to a gear-shift linkage (3b) or the like of the clutch (3a).

6. A differential gearing according to Claim 4 or 5, characterized in that an aerating valve (9) is provided as the pressure-regulating device.

7. A differential gearing according to one of Claims 4 to 6, characterized in that the pressure-regulating device (9) is actuable by way of the control device (11) by a pulsing dependent in its frequency upon the vehicle speed.

8. A differential gearing according to one of Claims 1 to 7, characterized in that the differential lock (3) can be switched off by way of the control device (11) during actuation of the brake.

## Revendications

1. Différentiel (2) pour véhicules à moteur à propulsion avant, avec un moyen de blocage (3) du différentiel commandé en fonction de la vitesse (v) du véhicule, caractérisé en ce que, à partir de l'état d'arrêt du véhicule à moteur jusqu'à une vitesse limite (vG) prédéfinie de ce véhicule, le moyen de blocage (3) du différentiel peut être commandé exclusivement en fonction de la vitesse du véhicule dans le sens d'un couple de blocage (M) diminuant avec une vitesse (v) croissante du véhicule.

2. Différentiel selon la revendication 1, caractérisé en ce que le moyen de blocage (3) du différentiel peut être commandé à partir de la vitesse limite (vG) dans le sens d'un couple de blocage résiduel (M Rest) restant constant.

3. Différentiel selon la revendication 1, caractérisé en ce qu'un compte-tours (13) associé à un essieu (12) non moteur du véhicule constitue le capteur de vitesse.

4. Différentiel selon la revendication 1 ou 2, avec un moyen de blocage (3) du différentiel constitué par un embrayage à action de force, de préférence un embrayage à lamelles (3a), et avec, pour la manoeuvre de l'embrayage, un servomoteur pouvant être gouverné par un dispositif de commande (11) en fonction de la vitesse du véhicule détectée par un capteur de vitesse, caractérisé en ce qu'il est prévu un servomoteur (5) pouvant être mis sous dépression dans le sens de l'ouverture de l'embrayage (3a) et comprenant un dispositif de réglage de la pression (9) pouvant être piloté.

5. Différentiel selon la revendication 4, caractérisé en ce que la servo-commande (5) est constituée par un dispositif à chambre à dépression (6, 7, 10) qui comprend, d'une part, une source de dépression, de préférence une pompe à vide (7) et, d'autre part, une chambre à dépression (6) se trouvant en liaison avec une tige de commande (3b) ou un élément analogue de l'embrayage (3a).

6. Différentiel selon la revendication 4 ou 5, caractérisé en ce qu'il est prévu comme dispositif de réglage de pression une soupape d'entrée d'air (9).

7. Différentiel selon l'une quelconque des revendications 4 à 6, caractérisé en ce que le dispositif régulateur de pression (9) est actionné au moyen du dispositif de commande (11) par une pulsation dont la fréquence est fonction de la vitesse du véhicule.

8. Différentiel selon l'une quelconque des revendications 1 à 7, caractérisé en ce que le moyen de blocage (3) du différentiel peut être mis hors service au moyen du dispositif de commande (11) lorsque le frein est actionné.
